# EUROPEAN PATENT APPLICATION

(11) **EP 2 680 506 A1**
(43) Date of publication of application: **01.01.2014**
(21) Application number: 12749663.6
(22) Date of filing: 20.02.2012
(51) Int. Cl.: H04L 12/56

(54) **COMMUNICATION SYSTEM, DATABASE, CONTROL DEVICE, COMMUNICATION METHOD AND PROGRAM**

(30) Priority: 21.02.2011 JP 2011034407
(71) Applicant: NEC Corporation, Tokyo 108-8001 (JP)
(72) Inventor: YAMAGATA, Masaya, Tokyo 108-8001 (JP); NAKAE, Masayuki, Tokyo 108-8001 (JP); MORITA, Yoichiro, Tokyo 108-8001 (JP); SHIMONISHI, Hideyuki, Tokyo 108-8001 (JP); SONODA, Kentaro, Tokyo 108-8001 (JP)
(74) Representative: Vossius & Partner
(86) International application number: PCT/JP2012/054013
(87) International publication number: WO 2012/115058

(57) **Abstract**

The present invention requires a simple configuration to realize detailed access control based on an access authority given to each user. A communication system comprises: a plurality of forwarding nodes each of which processes an incoming packet in accordance with a processing rule (packet handling operation); a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and a control apparatus which uses, when receiving a request for setting the processing rule from any one of the forwarding nodes, information about the source node included in the request for setting the processing rule, querying the data base for a resource accessible or inaccessible by the user of the source node, creating the processing rule based on the response from the data base, and setting the processing rule in the forwarding node.

## Description

### [Field]

### (REFERENCE TO RELATED APPLICATION)

The present invention is based upon and claims the benefit of the priority of Japanese patent application No. 2011-034407, filed on February 21, 2011, the disclosure of which is incorporated herein in its entirety by reference thereto.

The present invention relates to a communication system, a data base, a control apparatus, a communication method, and a program. In particular, it relates to a communication system, a data base, a control apparatus, a communication method, and a program for realizing communication in which a forwarding node arranged in a network forwards a packet.

### [Background]

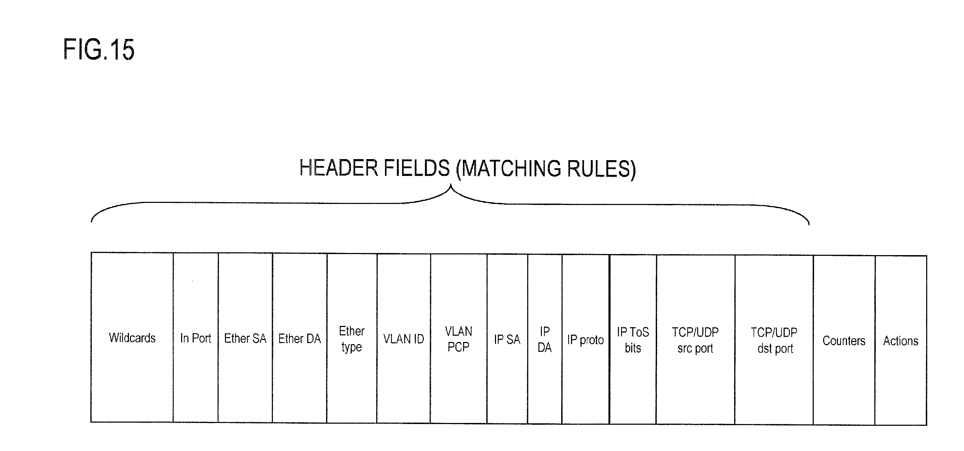

In recent years, a technique referred to as OpenFlow has been proposed (see Patent Literature 1 and Non Patent Literatures 1 and 2). OpenFlow recognizes communications as end-to-end flows and performs path control, failure recovery, load balancing, and optimization on a per-flow basis. An OpenFlow switch according to Non Patent Literature 2 has a secure channel for communication with an OpenFlow controller that serves as a control apparatus. In addition, the OpenFlow switch operates according to a flow table suitably added or rewritten by the OpenFlow controller. In a flow table, a set of the following three is defined for each flow: matching rules (Header Fields) against which a packet header is matched; flow statistical information (Counters); and Actions that define processing contents (see Fig. 15).

For example, if the OpenFlow switch receives a packet, the OpenFlow switch searches the flow table for an entry having a matching rule (see Header Fields in Fig. 15) that matches header information of the incoming packet. If the OpenFlow switch finds an entry matching the incoming packet as a result of the search, the OpenFlow switch updates the flow statistical information (Counters) and processes the incoming packet based on a processing content (packet transmission from a specified port, flooding, drop, etc.) written in the Actions field of the entry. If the OpenFlow switch does not find an entry matching the incoming packet as a result of the search, the OpenFlow switch forwards the incoming packet to the OpenFlow controller via the secure channel, to request the OpenFlow controller to determine a packet path based on the source and destination nodes of the incoming packet. After receiving a flow entry realizing the packet path, the OpenFlow switch updates the flow table. In this way, by using an entry stored in the flow table as a processing rule (packet handling operation), the OpenFlow switch executes packet forwarding.

### [Citation List]

### [Patent Literature]

[Patent Literature 1]
International Publication No. 2008/095010

### [Non Patent Literature]

[Non Patent Literature 1]
Nick McKeown, and seven others, "OpenFlow: Enabling Innovation in Campus Networks," [online], [Searched on December 1, 2010], Internet <URL:http://www.openflowswitch.org//documents/openflow-wp-latest. pdf>
[Non Patent Literature 2]
"OpenFlow Switch Specification" Version 1.0.0. (Wire Protocol 0x01) [Searched on December 1, 2010], Internet <URL:http://www.openflowswitch.org./documents/openflow-spec-v1.0.0 .pdf>

### [Summary]

### [Technical Problem]

The following analysis has been given by the present invention.

When a new flow is generated, the OpenFlow controller in Patent Literature 1 executes access control by referring to a policy file, executing a permission check, and calculating a path (see [0052] in Patent Literature 1). Thus, with the configuration in Patent Literature 1, access control is executed only on a terminal basis, not on a user basis, which is counted as a problem. For example, when a plurality of users share a single terminal, if one user is permitted to access a certain network resource, the other users subsequently using this terminal can access the network resource, causing inconvenience.

It is possible to execute access control on a user basis, by providing an authentication result obtained by an existing user authentication apparatus or the like to the OpenFlow controller. However, since the OpenFlow controller does not grasp what access authority is given to a user who has succeeded in the authentication, detailed access control based on a policy or the like defined per user cannot be executed, which is counted as a problem. In addition, if the OpenFlow controller is provided with access authority information for each user, problems with the resource and load and a problem with management of access authorities of many users will be caused.

In addition, if each of a plurality of OpenFlow controllers controls a different region or traffic in a centralized manner, it is necessary to solve various problems, including how access authority information needs to be distributed to these OpenFlow controllers and how access authority information needs to be synchronized among these OpenFlow controllers.

It is an object of the present invention is to provide: a communication system which includes a control apparatus as in the above OpenFlow that controls forwarding nodes in a centralized manner and which is capable of executing detailed access control based on an access authority given to each user with a simple configuration; a control apparatus; a policy management apparatus; a communication method; and a program.

### [Solution to Problem]

According to a first aspect of the present invention, there is provided a communication system, comprising: a plurality of forwarding nodes each of which processes an incoming packet in accordance with a processing rule (packet handling operation) in which a matching rule that determines a flow and a processing content that is applied to a packet matching the matching rule are associated with each other; a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and a control apparatus which uses, when receiving a request for setting the processing rule (packet handling operation) from any one of the forwarding nodes, information about the source node included in the request for setting the processing rule (packet handling operation), querying the data base for a resource accessible or inaccessible by the user of the source node, creating the processing rule (packet handling operation) based on the response from the data base, and setting the processing rule (packet handling operation) in the forwarding node.

According to a second aspect of the present invention, there is provided a data base, connected to a control apparatus setting a processing rule (packet handling operation) in a plurality of forwarding nodes each of which processes an incoming packet in accordance with the processing rule (packet handling operation) in which a matching rule that determines a flow and a processing content that is applied to a packet matching the matching rule are associated with each other; storing a first table for determining a role of a user of a source node from information about the source node and a second table for defining an accessible or inaccessible resource for each role; and transmitting a response about a resource accessible or inaccessible by the user of the source node in response to a request from the control apparatus.

According to a third aspect of the present invention, there is provided a control apparatus, connected to a plurality of forwarding nodes each of which processes an incoming packet in accordance with a processing rule (packet handling operation) in which a matching rule that determines a flow and a processing content that is applied to a packet matching the matching rule are associated with each other; connected to a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and using, when receiving a request for setting the processing rule (packet handling operation) from any one of the forwarding nodes, information about the source node included in the request for setting the processing rule (packet handling operation), querying the data base for a resource accessible or inaccessible by the user of the source node, creating the processing rule (packet handling operation) based on the response from the data base, and setting the processing rule (packet handling operation) in the forwarding node.

According to a fourth aspect of the present invention, there is provided a communication method for a communication system comprising: a plurality of forwarding nodes each of which processes an incoming packet in accordance with a processing rule (packet handling operation) in which a matching rule that determines a flow and a processing content that is applied to a packet matching the matching rule are associated with each other; a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and a control apparatus which sets the processing rule (packet handling operation) in the forwarding nodes, the communication method comprising steps of: causing the control apparatus to query the data base, when receiving a request for setting the processing rule (packet handling operation) from any one of the forwarding nodes, for a resource accessible or inaccessible by the user of the source node; and causing the control apparatus to create the processing rule (packet handling operation) based on the response from the data base and setting the processing rule (packet handling operation) in the forwarding node. This method is associated with a certain machine, that is, with the control apparatus controlling a plurality of forwarding nodes processing an incoming packet.

According to a fifth aspect of the present invention, there is provided a program causing a computer included in a control apparatus, which is connected to a plurality of forwarding nodes each of which processes an incoming packet in accordance with a processing rule (packet handling operation) in which a matching rule that determines a flow and a processing content that is applied to a packet matching the matching rule are associated with each other and to a data base which stores a first table for determining a role of a user of a source node from information about the source node and a second table for defining an accessible or inaccessible resource for each role and which transmits a response about a resource accessible or inaccessible by the user of the source node in response to a request from the control apparatus and which sets the processing rule (packet handling operation) in the forwarding nodes, to execute processes of: causing the control apparatus to query the data base, when receiving a request for setting the processing rule (packet handling operation) from any one of the forwarding nodes, for a resource accessible or inaccessible by the user of the source node; and causing the control apparatus to create the processing rule (packet handling operation) based on the response from the data base and setting the processing rule (packet handling operation) in the forwarding node. This program can be recorded in a computer-readable storage medium. Namely, the present invention can be embodied as a computer program product.

### [Advantageous Effects of Invention]

According to the present invention, not only path control based on a flow, but also detailed access control based on a role given to each user can be executed.

### [Brief Description of Drawings]

Fig. 1 illustrates an outline of the present disclosure.
Fig. 2 illustrates a configuration of a communication system according to a first exemplary embodiment of the present disclosure.
Fig. 3 illustrates a detailed configuration of an IAM according to the first exemplary embodiment of the present disclosure.
Fig. 4 illustrates policy information stored in an access control policy storage unit according to the first exemplary embodiment of the present disclosure.
Fig. 5 illustrates resource information stored in a resource information storage unit according to the first exemplary embodiment of the present disclosure.
Fig. 6 illustrates an access control policy information table stored in an ACL data base according to the first exemplary embodiment of the present disclosure.
Fig. 7 illustrates an authentication information table stored in the ACL data base according to the first exemplary embodiment of the present disclosure.
Fig. 8 is a block diagram illustrating a configuration of a control apparatus according to the first exemplary embodiment of the present disclosure.
Fig. 9 is a sequence diagram illustrating an operation according to the first exemplary embodiment of the present disclosure.
Fig. 10 is another sequence diagram illustrating an operation according to the first exemplary embodiment of the present disclosure.
Fig. 11 illustrates an example of access control according to the first exemplary embodiment of the present disclosure.
Fig. 12 illustrates another example of access control according to the first exemplary embodiment of the present disclosure.
Fig. 13 illustrates another example of access control according to the first exemplary embodiment of the present disclosure.
Fig. 14 illustrates a configuration of a communication system according to a second exemplary embodiment of the present disclosure.
Fig. 15 illustrates a configuration of a flow entry disclosed in Non Patent Literature 2.

### [Description of Embodiments]

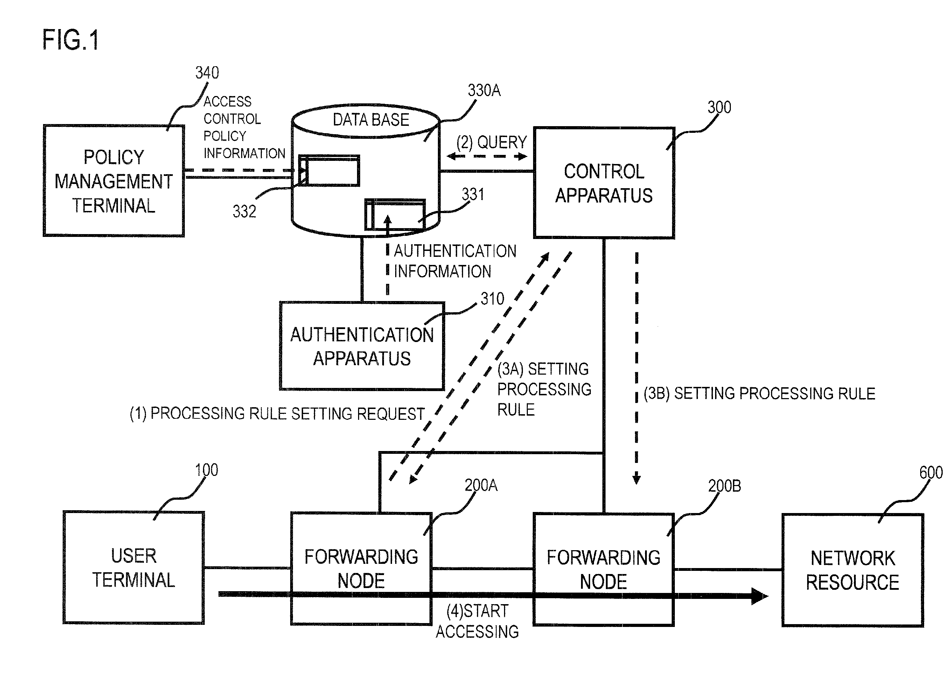

First, the present disclosure will be summarized with reference to the drawings. As illustrated in Fig. 1, the present disclosure is realized by: a plurality of forwarding nodes 200A and 200B each processing an incoming packet in accordance with a processing rule (packet handling operation) in which a matching rule that determines a flow and a processing content that is applied to a packet matching the matching rule are associated with each other; a data base 330A storing first and second tables 331 and 332, respectively; and a control apparatus 300 setting a processing rule having a validity period in the forwarding nodes 200A and 200B. In the following outline, various components are denoted by reference characters for the sake of convenience. Namely, the following reference characters are merely used as examples to facilitate understanding of the present disclosure, not to limit the present disclosure to the illustrated modes.

An authentication apparatus 310 executes a user authentication operation on users. The first table 331 of the data base 330A stores an entry group used for determining a role of a user based on information about the source node corresponding to the user who has succeeded in the authentication procedure. It is desirable that an entry in the first table 331 be added after a user logs in or a predetermined authentication procedure is executed and be deleted after a user logs out or a certain period of time elapses.

The second table 332 of the data base 330A stores an entry group (access control policies) in which an accessible or inaccessible resource is defined for each role by a policy management terminal 340 that receives input of access control policy information from a network administrator or the like.

When the forwarding node 200A receives a packet from a user terminal 100, the forwarding node 200A searches for a processing rule having a matching rule matching the packet. If the forwarding node 200A does not store a processing rule having a matching rule matching the incoming packet, the forwarding node 200A transmits a message as a processing rule setting request to the control apparatus 300 (see (1) processing rule setting request in Fig. 1).

When the control apparatus 300 receives a processing rule setting request from the forwarding node 200A or 200B managed by the control apparatus 300, the control apparatus 300 extracts information about the source node, such as an IP address or a MAC (Media Access Control) address included in the processing rule setting request. The control apparatus 300 queries the data base 330A for a list of resources that are accessible or inaccessible from the source node (see query (2) in Fig. 1).

After receiving the query, the data base 330A first refers to the first table 331 and determines the role of the user of the source node to which the query from the control apparatus 300 is directed. Next, the data base 330A refers to the second table 332, extracts a list of resources that are accessible or inaccessible by the determined role, and transmits the list to the control apparatus 300.

After receiving the list, the control apparatus 300 checks the destination included in the processing rule setting request against the list, to determine whether the control apparatus 300 can create a path to the destination included in the processing rule setting request. For example, if the processing rule setting request requests creation of a path from the user of the source node to a destination within the access authority of the user (for example, a network resource 600) and setting of a processing rule realizing the path, the control apparatus 300 creates a path between the user terminal 100 of the user corresponding to the source node and the network resource 600 and sets processing rules in forwarding nodes on the path (see (3A) and (3B) setting processing rules in Fig. 1). However, if the processing rule setting request is beyond the access authority of the user of the source node, the processing rule setting request is rejected. In this case, the control apparatus 300 may set a processing rule in the forwarding node 200A so that the forwarding node 200A discards subsequent packets from the user.

In this way, when receiving a processing rule setting request, the control apparatus 300 can determine the role of the user corresponding to the source node and determine whether access to the network resource 600 is allowed in accordance with an access control policy separately set by the policy management terminal 340. A validity period may be set in a processing rule. In this case, if the validity period elapses after the processing rule is set in the forwarding node 200A or 200B or after the forwarding node 200A or 200B receives a packet matching the matching rule last, the forwarding node 200A or 200B deletes the processing rule.

If the list transmitted from the data base 330A indicates a resource inaccessible from the user, the control apparatus 300 may set a processing rule for discarding packets from the user in the forwarding node 200A or 200B. In this way, even when receiving subsequent packets from the user, since the forwarding node 200A or 200B does not transmit a processing rule setting request, load on the control apparatus 300 can be reduced.

### [First exemplary embodiment]

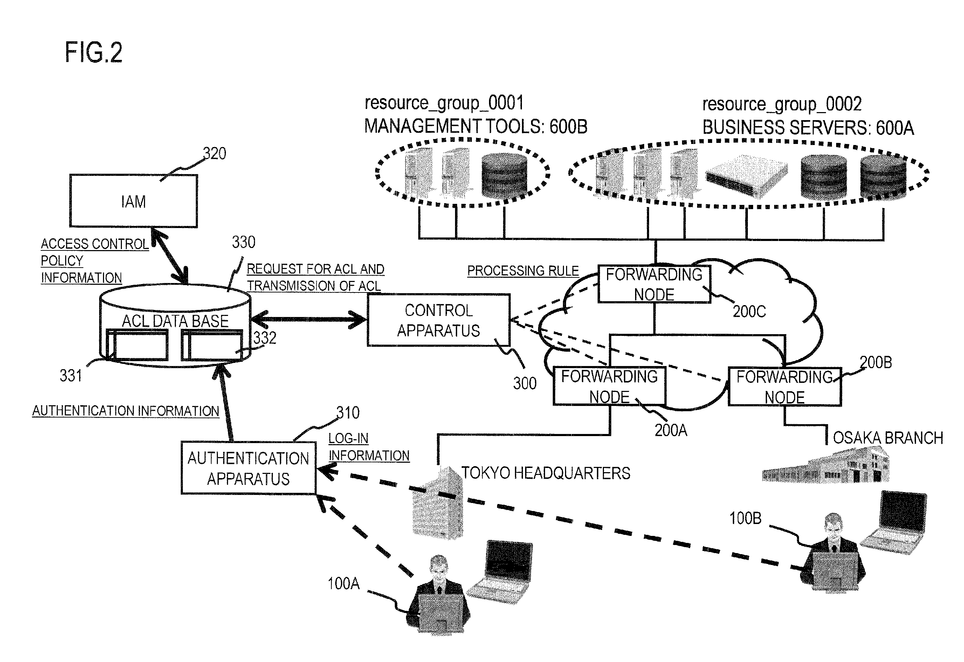

Next, a first exemplary embodiment of the present disclosure will be described in detail with reference to the drawings. Fig. 2 illustrates a configuration of a communication system according to a first exemplary embodiment of the present disclosure. In Fig. 2, the communication system includes: a plurality of forwarding nodes 200A to 200C; a control apparatus 300 setting processing rules in these forwarding nodes; an ACL data base 330 transmitting access control list information (ACL information) in response to a query from the control apparatus 300; an authentication apparatus 310 executing an authentication procedure on a user terminal 100A and registering an authentication result in the ACL data base 330; and an integrated access manager (IAM) 320 supplying role-based ACL information to the ACL data base 330.

These forwarding nodes 200A to 200C are switching apparatuses each processing an incoming packet in accordance with a processing rule in which a matching rule that determines a flow and a processing content that is applied to the matching rule are associated with each other. An OpenFlow switch in Non Patent Literature 2 that operates in accordance with a flow entry illustrated in Fig. 15 as a processing rule can be used as each of the forwarding nodes 200A to 200C. In addition, in the present exemplary embodiment, the forwarding node 200A is arranged in Tokyo headquarters and receives packets addressed to business servers 600A and management tools 600B from the user terminal 100A of the Tokyo headquarters. Likewise, the forwarding node 200B is arranged in an Osaka branch and receives packets addressed to the business servers 600A and the management tools 600B from a user terminal 100B of the Osaka branch.

In addition, the business servers 600A and the management tools 600B are connected to the forwarding node 200C. The business servers 600A provide users of the Tokyo headquarters and the Osaka branch with services used for daily duties. The management tools 600B provide management tools for setting these business servers or updating each table in the ACL data base. In the following description, the business servers 600A are provided with resource_group_0001 as a resource group ID, and the management tools 600B are provided with resource_group_0002 as a resource group ID.

The authentication apparatus 310 is an authentication server or the like executing a user authentication procedure on the user terminals 100A and 100B by using passwords, biometric authentication information, or the like. The authentication apparatus 310 transmits authentication information indicating results of the user authentication procedure executed on the user terminals 100A and 100B to the ACL data base 330. Such authentication apparatus 310 can be realized by using an apparatus referred to as an LDAP (Lightweight Directory Access Protocol) server or a RADIUS authentication server.

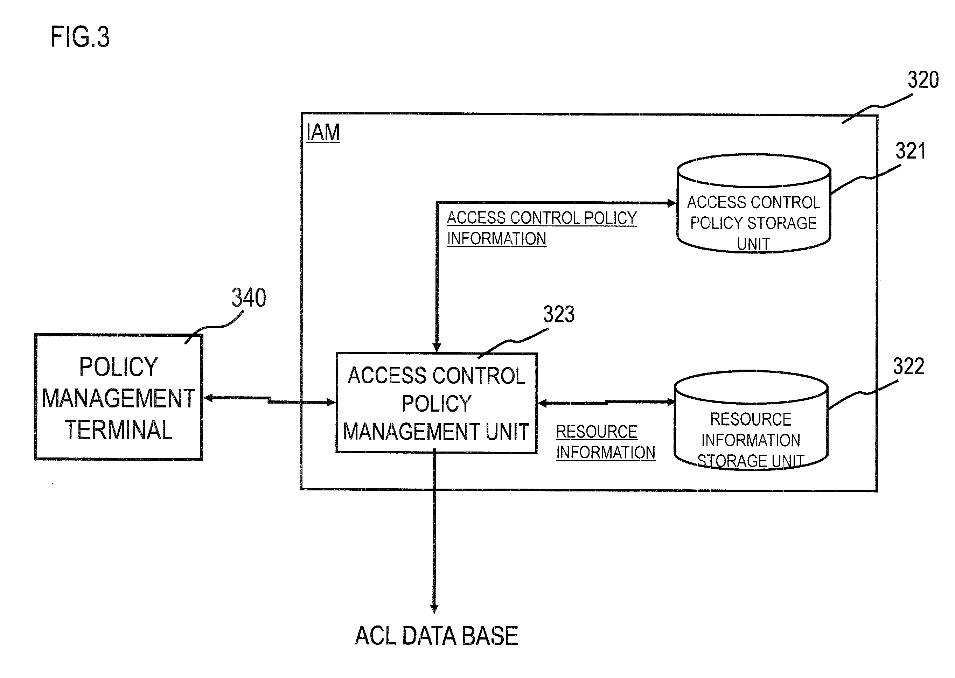

Fig. 3 is a block diagram illustrating a detailed configuration of the IAM 320. In Fig. 3, the IAM 320 includes an access control policy storage unit 321, a resource information storage unit 322, and an access control policy management unit 323.

The access control policy management unit 323 receives data from the policy management terminal 340 operated by a network administrator or the like and registers the data in the access control policy storage unit 321 or the resource information storage unit 322.

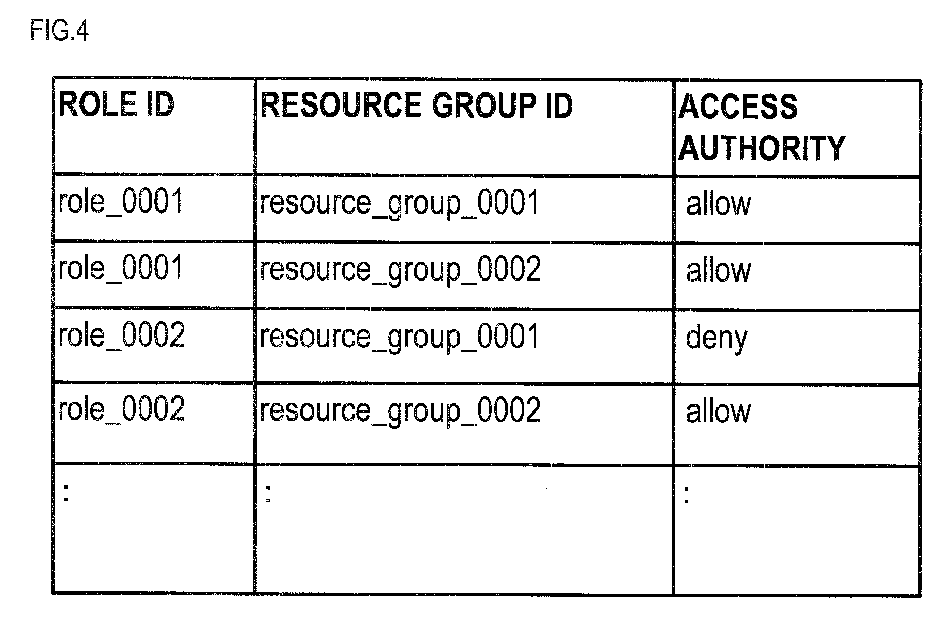

Fig. 4 illustrates policy information stored in the access control policy storage unit 321. In the example in Fig. 4, policy information in which a resource group ID given to a resource group and an access authority are set for each role determined by a role ID. For example, a user having role ID "role_0001" is permitted (allow) to access both resource groups having resource group IDs "resource_group_0001" and "resource_group_0002." However, while a user having role ID "role_0002" is prohibited (deny) to access the resource group having resource group ID "resource_group_0001," the user is permitted to access the resource group having resource group ID "resource_group_0002."

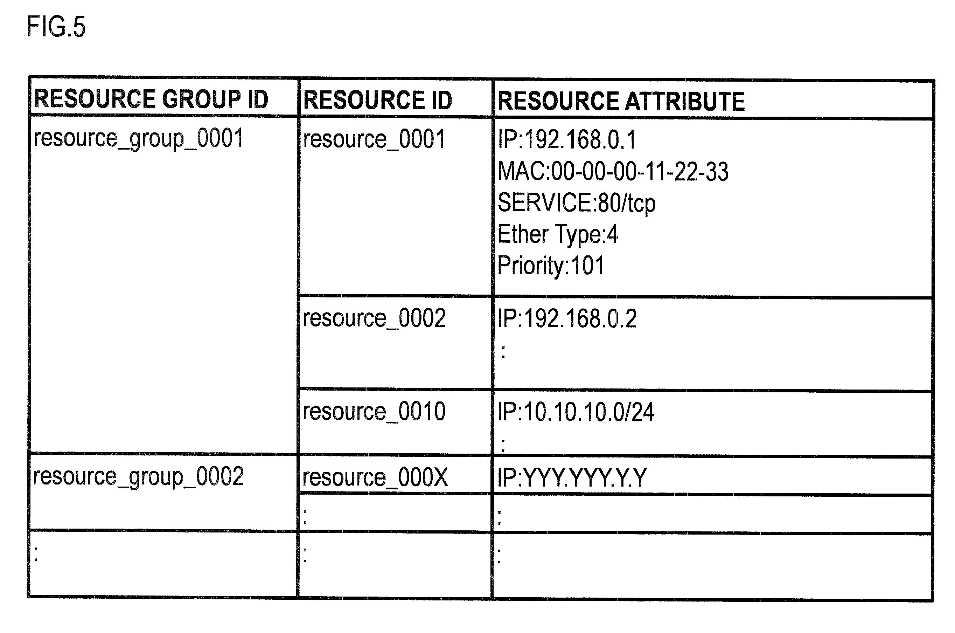

Fig. 5 illustrates resource information stored in the resource information storage unit 322. In the example in Fig. 5, the resource IDs of the resources belonging to the above resource group IDs are associated with detailed attributes of the respective resources. For example, the group determined by resource group ID "resource_group_0001" includes resources having resource IDs "resource 0001," "resource_0002," and "resource_0003." The IP addresses, the MAC addresses, and port numbers used for services of the resources can be determined.

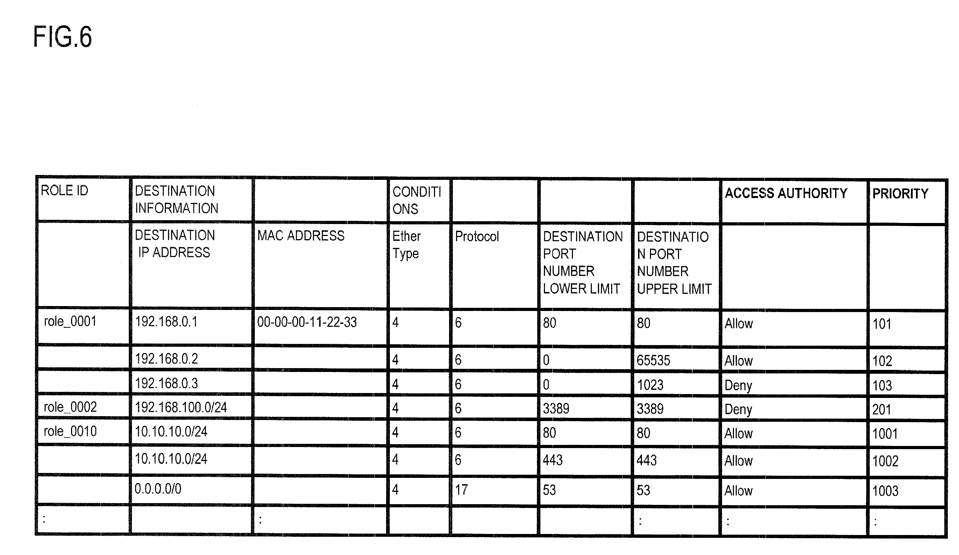

Fig. 6 illustrates the access control policy information table 332 stored in the ACL data base 330. Fig. 6 illustrates an access control policy information table storing an entry for each role ID. In an entry, destination information such as an IP address or a MAC address, conditions (communication conditions) such as EtherType, Protocol, and a port number range (lower limit to upper limit), an access authority, and a priority are associated with each other. For example, the user having role ID "role_0001" is permitted (allow) to access a resource having IP address "192.168.0.1" and MAC address "00-00-00-11-22-33" under the condition that EtherType = 4 (IPv4), Protocol = 6 (TCP), and port number = 80. Such entry can be created by extracting detailed data corresponding to a resource ID of an entry in the policy information illustrated in Fig. 4 from the resource information storage unit 322. When competing entries are set within a single role ID or a plurality of role IDs, the priority field in the access control policy information table 332 is used to determine the content to be transmitted to the control apparatus 300. For example, specific priorities can be set based on superiority of each role or a containment relationship.

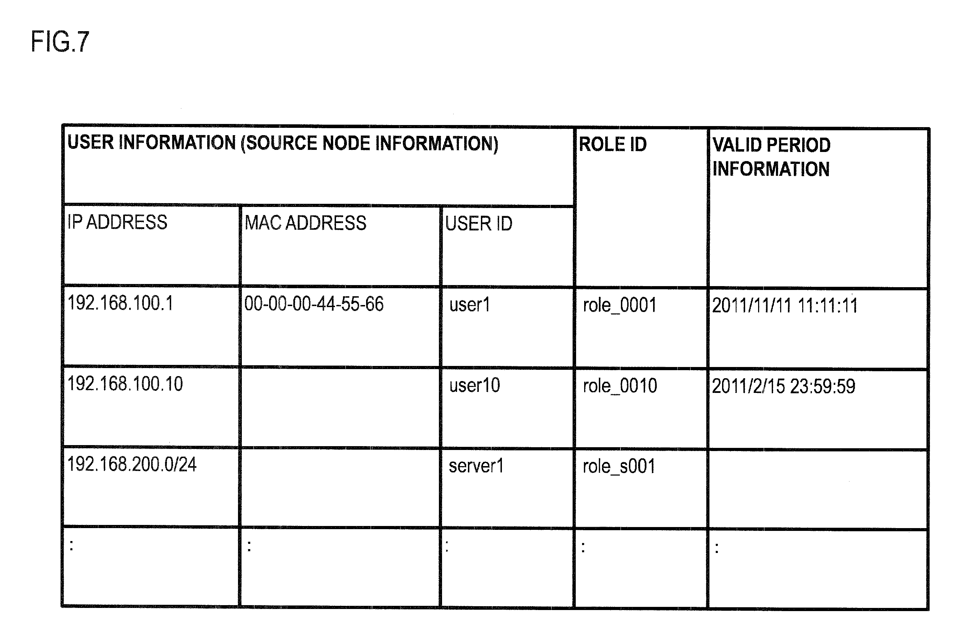

Fig. 7 illustrates the authentication information table 331 stored in the ACL data base 330. For example, if a user having user ID "user1" succeeds in user authentication, the authentication apparatus 310 registers an entry having source information including user ID user1, IP address "192.168.100.1," and MAC address "00-00-00-44-55-66," role ID "role_0001," and a validity period set as needed in the authentication information table 331. Likewise, if a user having user ID "user10" succeeds in user authentication, the authentication apparatus 310 registers an entry for user10 having attributes including user ID user10, IP address "192.168.100.10," and role ID "role_0010" in the authentication information table 331. The user ID field in the source information in Fig. 7 can be omitted as needed. In addition, a combination of an IP address and a MAC address is not necessarily used as the source information. One of these addresses may be omitted. Alternatively, instead of these addresses, the ID of a forwarding node to which the user terminal 100 is connected may be used. In the present exemplary embodiment, each entry in the authentication information table 331 is deleted when a corresponding user logs out or when a validity period set in the validity period field elapses (time-out).

In addition, if the content of the access control policy storage unit 321 or the resource information storage unit 322 is updated, the access control policy management unit 323 extracts entries that need to be reflected based on the updated content from the access control policy information table 332 (see Fig. 6) of the ACL data base 330 and reflects the content. For example, if resource group ID "resource_group_0002" is deleted from the resources accessible by the user having role ID "role_0001," first, the access control policy management unit 323 refers to the resource information storage unit 322 to determine the resources belonging to resource group ID "resource_group_0002." Next, among the entries having role ID "role_0001" in the access control policy information table 332 in Fig. 6, the access control policy management unit 323 deletes entries in which an access authority to the resources belonging to resource group ID "resource_group_0002" is defined. Alternatively, the access control policy management unit 323 changes the access authority of these entries to "deny."

Likewise, for example, if a new resource is added to resource group ID "resource_group_0002," first, the access control policy management unit 323 refers to the access control policy storage unit 321 to determine roles permitted or prohibited to access resource group ID "resource_group_0002," Next, the access control policy management unit 323 adds an entry in which the new resource is defined in the access control policy information table 332 in Fig. 6 as a resource permitted or prohibited to be accessed by role ID "role_0001."

When the ACL data base 330 receives a request from the control apparatus 300 for a list of resources accessible or inaccessible by an arbitrary source node, the ACL data base 330 determines whether a user corresponding to the source node information is registered in the authentication information table 331 (more correctly, whether the user has been authenticated). If the source node is registered in the authentication information table 331, by using the role ID associated with the source node as a key, the ACL data base 330 searches the access control policy information table 332 for resources set to be accessible or inaccessible by the user of the source node and a list of the corresponding conditions. The ACL data base 330 transmits the resources and the list to the control apparatus 300.

When the control apparatus 300 receives processing rule setting requests from the forwarding nodes 200A to 200C, the control apparatus 300 queries the ACL data base 330 for resources accessible or inaccessible by the user corresponding to the source node, creates processing rules based on the query results, and sets the processing rules in the forwarding nodes 200A to 200C.

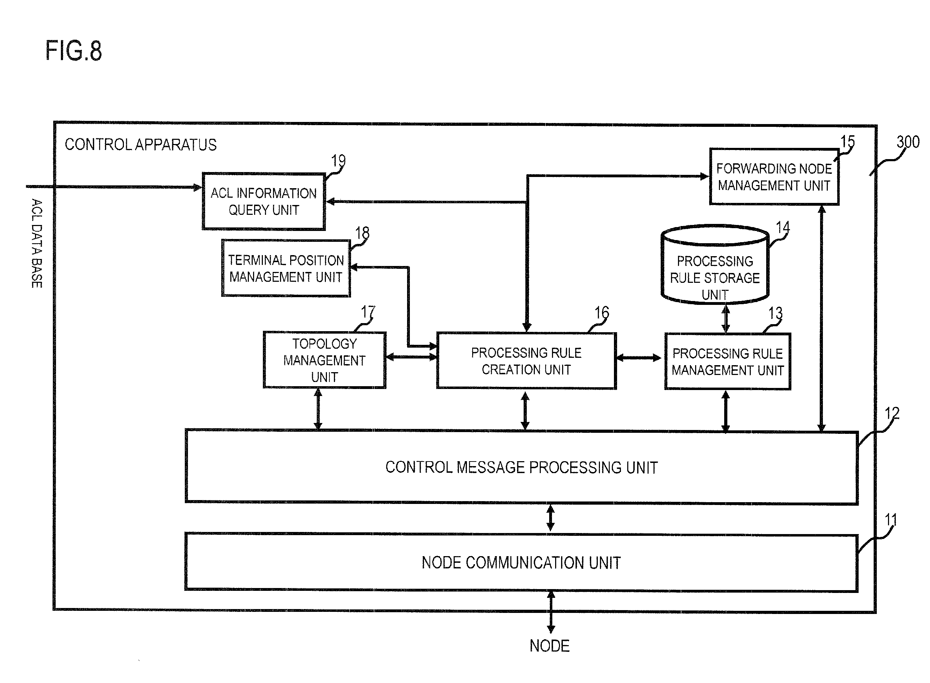

Fig. 8 is a block diagram illustrating a detailed configuration of the control apparatus 300 according to the present exemplary embodiment. In Fig. 8, the control apparatus 300 includes a node communication unit 11 communicating with the forwarding nodes 200A to 200C, a control message processing unit 12, a processing rule management unit 13, a processing rule storage unit 14, a forwarding node management unit 15, a processing rule creation unit 16, a topology management unit 17, a terminal position management unit 18, and an ACL information query unit 19. These units operate as follows.

The control message processing unit 12 analyzes control messages supplied from the forwarding nodes 200A to 200C and transmits control message information to relevant processing means in the control apparatus 300.

The processing rule management unit 13 manages what processing rules are set in which forwarding nodes. More specifically, the processing rule management unit 13 registers processing rules created by the processing rule creation unit 16 in the processing rule storage unit 14 and sets such processing rules in forwarding nodes. In addition, when a forwarding node notifies the processing rule management unit 13 of deletion of a processing rule, for example, when the processing rules set in the forwarding node is changed, the processing rule management unit 13 updates the information registered in the processing rule storage unit 14.

The forwarding node management unit 15 manages capabilities of each forwarding node controlled by the control apparatus 300 (for example, the number of ports, the types of the ports, the types of the actions supported, etc.).

Via the ACL information query unit 19, the processing rule creation unit 16 queries the ACL data base 330 for entries in the access control policy information table 332 that correspond to the user role corresponding to the source node that has transmitted a predetermined rule setting request. Based on the transmitted content, the processing rule creation unit 16 determines whether to set a processing rule. As a result of the determination, if the processing rule creation unit 16 determines that a processing rule can be set, based on the content, the processing rule creation unit 16 creates a path and a processing rule realizing the path.

More specifically, based on the communication terminal position information managed by the terminal position management unit 18 and the network topology information established by the topology management unit 17, the processing rule creation unit 16 calculates a packet forwarding path from the user terminal to a resource accessible by the user terminal. Next, the processing rule creation unit 16 acquires port information or the like of the forwarding nodes on the forwarding path from the forwarding node management unit 15 and determines actions executed by the forwarding nodes on the calculated forwarding path and matching rules determining flows to which the actions are applied. A matching rule can be created by using a source node IP address, a destination IP address, a condition (option), etc. included in a processing rule setting request.

For example, when a user having role ID "role_0001" in Fig. 6 transmits a packet addressed to the management tool 600B and the control apparatus 300 receives a processing rule setting request, first, the processing rule creation unit 16 determines whether the user is permitted to access the management tool 600B, based on data transmitted from the ACL data base 330. If the processing rule creation unit 16 determines that the user is permitted, the processing rule creation unit 16 creates a processing rule defining an action for forwarding the packet from the forwarding node 200C, which is the next hop that forwards packets addressed from the user to the management tool 600B, or from a port of the forwarding node 200C connected to the management tool 600B.

If a user does not have authority for accessing a resource, based on user terminal position information managed by the terminal position management unit 18, the processing rule creation unit 16 creates a processing rule defining an action for discarding packets addressed to the resource for which the user terminal does not have an access authority and a matching rule for a forwarding node to which the user terminal is connected. For example, in the case of the user having role ID "role_0001," the access authority to IP address "192.168.0.3" is set to "deny." Thus, the processing rule creation unit 16 creates and sets a processing rule for discarding packets addressed to IP address "192.168.0.3."

The topology management unit 17 establishes network topology information based on a connection relationship among the forwarding nodes 200A to 200C collected via the node communication unit 11.

The terminal position management unit 18 manages information for determining the positions of the user terminals connected to the communication system. In the present exemplary embodiment, an IP address is used as information determining a user terminal, and a forwarding node identifier and port information of a forwarding node connected to the user terminal are used as information determining the position of the user terminal. Of course, instead of such information, a terminal and the position thereof may be determined by using information supplied from the authentication apparatus 310, for example.

The ACL information query unit 19 queries the ACL data base 330 for a list of destinations accessible or inaccessible by the user of the source node for which the predetermined rule setting request is transmitted, based on the request from the processing rule creation unit 16.

The control apparatus 300 as described above can be realized by adding the above ACL information query unit 19 and a processing rule (flow entry) creation function based on response results from the ACL information query unit 19 to the OpenFlow controller in Non Patent Literatures 1 and 2.

In addition, each unit (processing means) of the control apparatus 300 illustrated in Fig. 3 can be realized by a computer program causing a computer constituting the control apparatus 300 to use hardware of the computer, to store the above information, and to execute the above process.

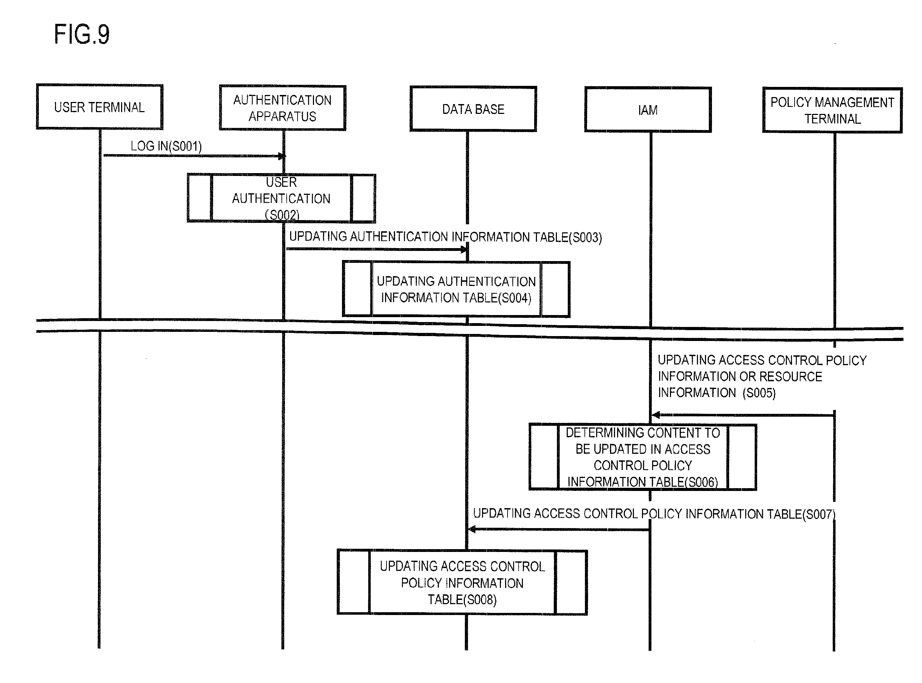

Next, an operation according to the present exemplary embodiment will be described in detail with reference to the drawings. First, an updating process of the authentication information table 331 by the authentication apparatus 310 and an updating process of the access control policy information table 332 by the IAM 320 will be described with reference to Fig. 9.

When the authentication apparatus 310 receives a log-in request from the user terminal 100 (S001 in Fig. 9), the authentication apparatus 310 executes a predetermined procedure on the user terminal 100 to determine whether to authenticate the user (S002 in Fig. 9).

The following description will be made assuming that the authentication apparatus 310 authenticates the user. In this case, the authentication apparatus 310 creates an entry to be registered in the authentication information table 331 illustrated in Fig. 6 and updates the authentication information table 331 of the ACL data base 330 (S003 and S004 in Fig. 9). In this way, an entry including a new user, a role ID thereof, and a validity period is added to the authentication information table 331 in Fig. 6.

Separately from the above user authentication procedure, data a stored in the access control policy storage unit 321 and the resource information storage unit 322 in the IAM 320 is updated by a network administrator or the like via the policy management terminal 340 (S005 in Fig. 9).

When notified of updating of the data, the IAM 320 determines the content to be updated in the access control policy information table 332 in Fig. 6, based on the updated content (S006 in Fig. 9). As described above, the content to be updated in this step is determined based on change of the authority of each role in the policy information or change of the details in the resource information.

Next, the IAM 320 updates the access control policy information table 332 of the ACL data base 330 in accordance with the determined content (S007 and S008 in Fig. 9).

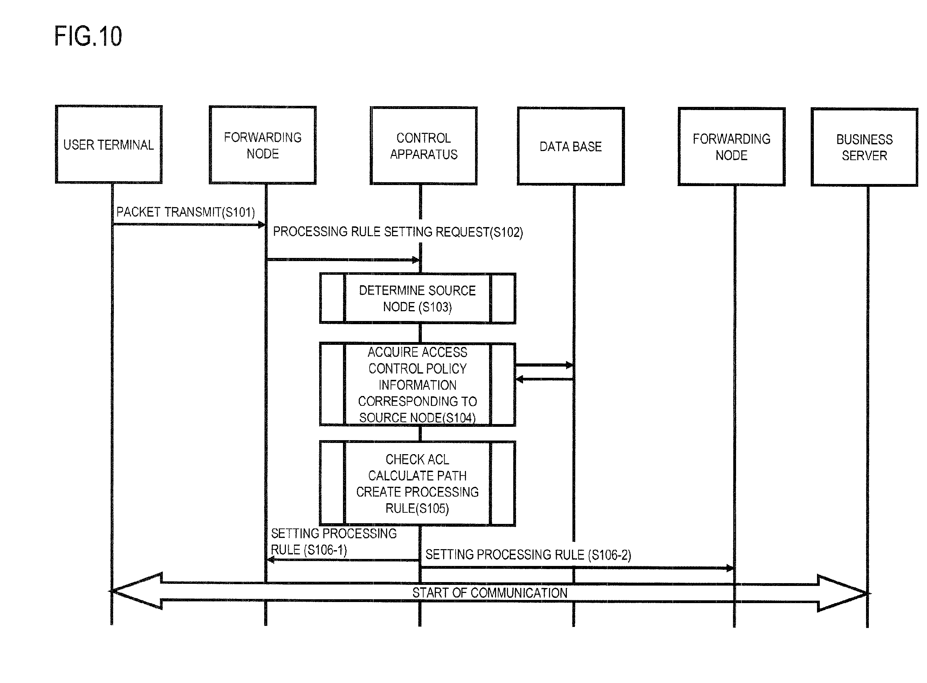

Next, a flow of a processing rule setting process by using the content of the ACL data base 330 updated as described above will be described in detail with reference to Fig. 10. In Fig. 10, first, when the user terminal 100 transmits a packet addressed to the business server 600A (S101 in Fig. 10), the forwarding node 200A searches for a processing rule matching the packet and processes the packet.

In this example, since no processing rule matching the packet is set in the forwarding node 200A, the forwarding node 200A requests the control apparatus 300 to set a processing rule (S102 in Fig. 10).

After receiving the processing rule setting request, the control apparatus 300 determines a source node, based on an IP address or a MAC address included in the processing rule setting request (S103 in Fig. 10). In addition, the control apparatus 300 acquires an entry corresponding to the user role of the determined source node from the access control policy information table 332 of the ACL data base 330 (S104 in Fig. 10).

The control apparatus 300 determines whether to create a path by matching the destination, for which the processing rule setting request is created, against the entries in the access control policy information table 332. If the control apparatus 300 determines that a path can be created, the control apparatus 300 calculates a path and creates processing rules defining packet processing contents for relevant forwarding nodes (S105 in Fig. 10).

After the control apparatus 300 sets such processing rules in the forwarding nodes on the path (S106-1 and S106-2 in Fig. 10), communication between the user terminal and a business server can be started ("start of communication" in Fig. 10).

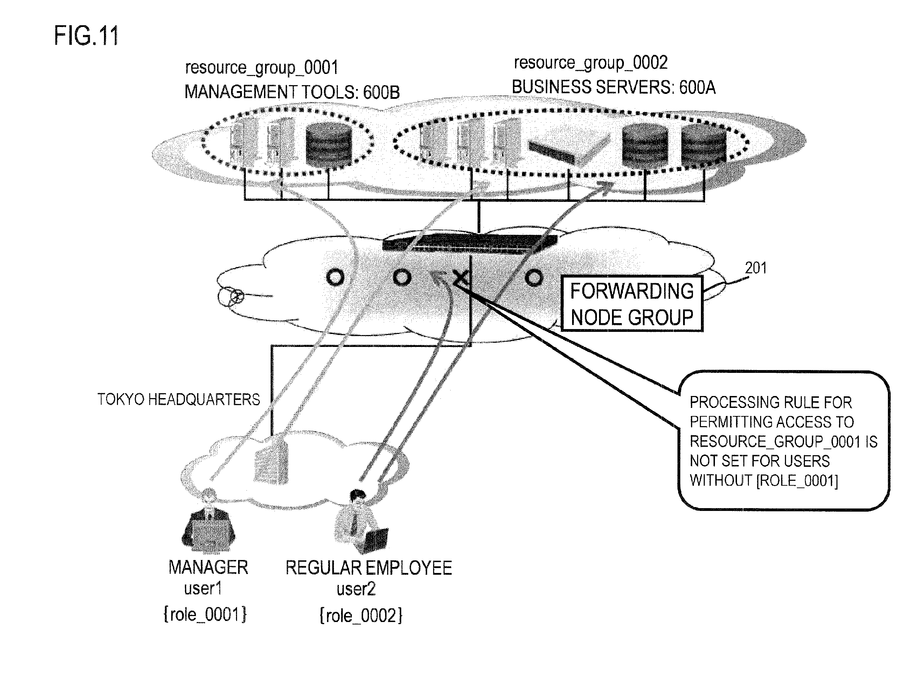

As described above, the ACL data base integrally manages the content managed by the IAM 320 and the authentication process result obtained by the authentication apparatus 310, and as needed, the control apparatus 300 refers to the ACL data base and creates a processing rule. In this way, for example, in the case of a manager and a regular employee having role IDs "role_0001" and "role_0002," respectively, accurate access control can be executed only by managing the two role IDs, as illustrated in Fig. 11. In addition, when access control is executed, the access can be controlled by the port number range or the protocol, in accordance with the items in the condition fields in the access control policy information table 332 illustrated in Fig. 6.

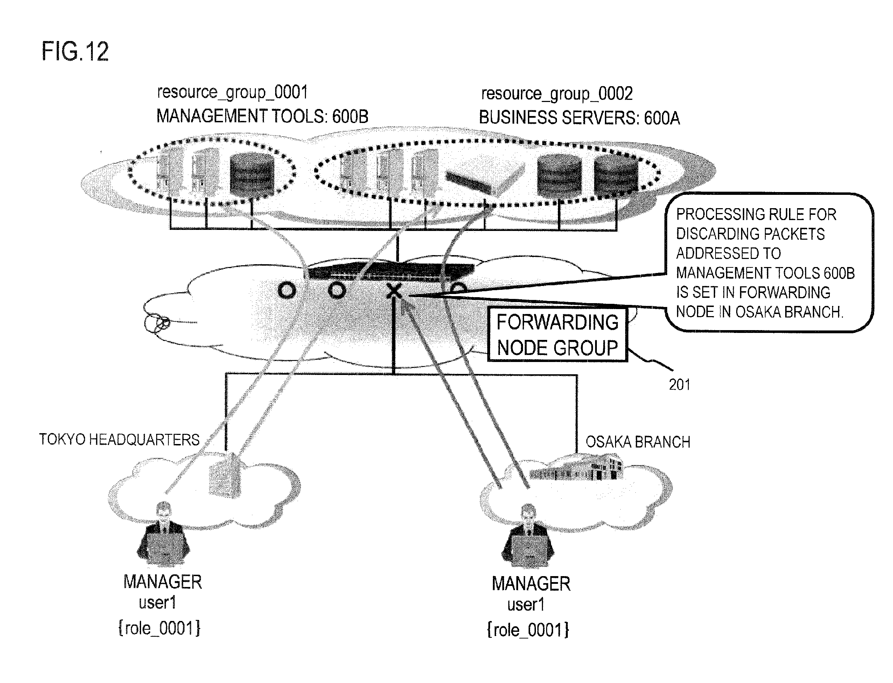

In addition, an information field representing a position where access is permitted may be added in the access control policy information table 332 in Fig. 6. In this way, in addition to the forwarding node from which the control apparatus has received the processing rule setting request, the control apparatus can set processing rules in other forwarding nodes corresponding to the position information field. In this way, for example, position-based access control can be realized, as illustrated in Fig. 12. When a manager having role ID "role_0001" accesses from the Tokyo headquarters, the manager is permitted to access the business servers and the management tools. However, when the manager is in the Osaka branch on a business trip or the like and accesses from the Osaka branch, the manager is prohibited to access the management tools. Of course, access from the Osaka branch can entirely be prohibited. These access control operations can be realized by rewriting data in the access control policy storage unit 321 via the IAM 320 or by rewriting the access control policy information table 332 via a management tool 600B.

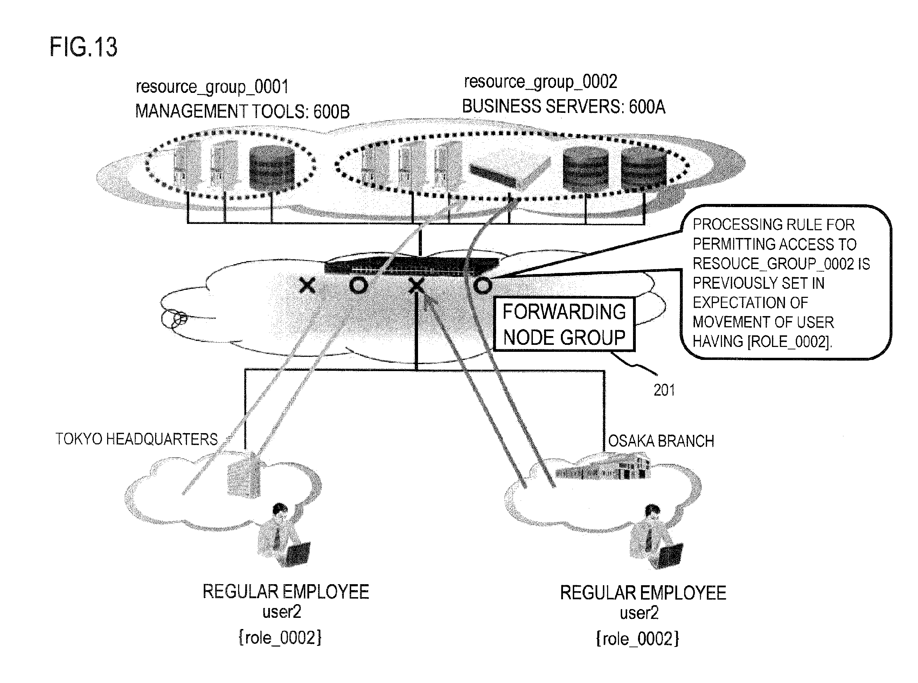

In addition, for example, as illustrated in Fig. 13, by setting processing rules in a forwarding node group 201 in the Osaka branch so that a user terminal of a regular employee is permitted to access the business servers 600A, the regular employee having role ID "role_0002" on a business trip or the like can access the business servers 600A from the Osaka branch. Such control can also be realized by rewriting data in the access control policy storage unit 321 via the IAM 320 or by rewriting the access control policy information table 332 via a management tool 600B.

In addition, the control apparatus 300 may be configured to access the ACL data base 330 at predetermined time intervals to determine whether to set a processing rule or to determine validity of an existing processing rule. In this way, access can be controlled in various ways. For example, access to the management tools 600B can be permitted within a certain period (for example, 2011/04/01 to 2011/06/01) or within a certain time period (for example, 10:00 to 17:30) while prohibited in any other period or time period. If the access authority is temporarily modified in the above period, the content of the changed access authority can be reflected in the processing rule. Of course, it is possible to realize access control in which the above position, time, and period are combined.

### [Second exemplary embodiment]

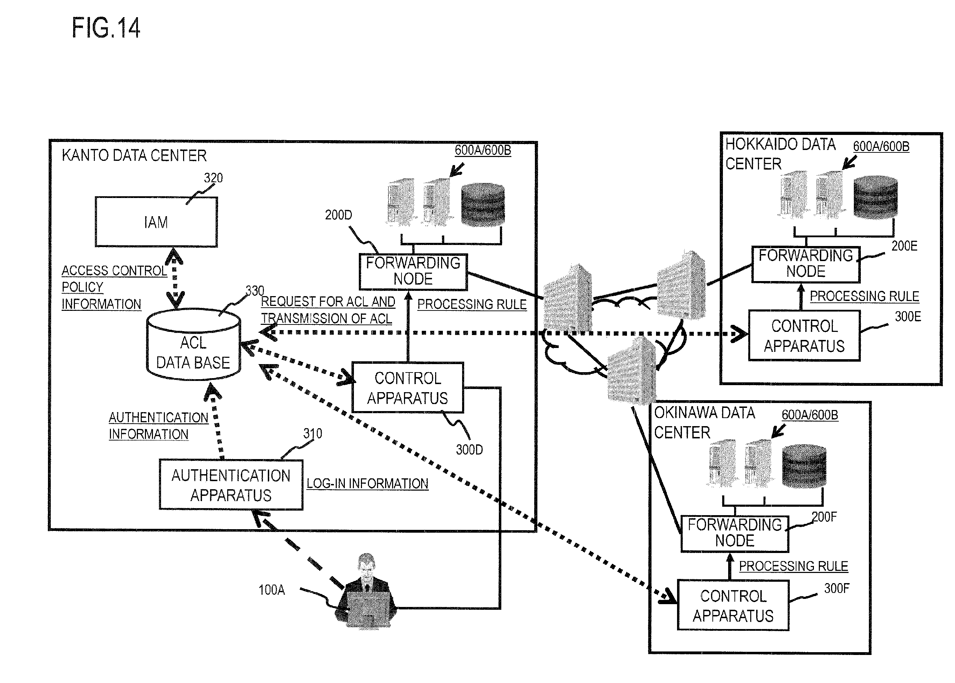

Next, a second exemplary embodiment of the present disclosure will be described in detail with reference to the drawings. In the second exemplary embodiment, a plurality of control apparatuses are arranged. Fig. 14 illustrates a configuration of a communication system according to the second exemplary embodiment of the present disclosure. Since the second exemplary embodiment of the present disclosure can be realized by the same components as those according to the first exemplary embodiment, the second exemplary embodiment will hereinafter be described with a focus on the difference.

In Fig. 14, the communication system includes three control apparatuses 300D to 300F and forwarding nodes 200D to 200F that operate in accordance with processing rules set by the control apparatuses 300D to 300F. A Kanto data center, a Hokkaido data center, and an Okinawa data center are constituted by the respective control apparatuses and forwarding nodes and are connected to each other. The number of control apparatuses and the number of forwarding nodes in Fig. 14 are examples used to facilitate description of the present exemplary embodiment. Thus, the present disclosure is not limited to such examples. In addition, while the authentication apparatus 310 is not illustrated in the Hokkaido data center or the Okinawa data center in Fig. 14, the authentication apparatus 310 may be arranged in the Hokkaido data center or the Okinawa data center.

Basic functions of the authentication apparatus 310 and the IAM 320 are the same as those of the authentication apparatus and the IAM according to the above first exemplary embodiment. The difference is that the authentication, apparatus 310 according to the present exemplary embodiment executes an authentication procedure with users using the Kanto data center, the Hokkaido data center, and the Okinawa data center and registers the results in the authentication information table 331 of the ACL data base 330.

The control apparatuses 300D to 300F can access the ACL data base 330. When any one of the control apparatuses 300D to 300F receives a processing rule setting request from the corresponding one of the forwarding nodes 200D to 200F, the one of the control apparatuses 300D to 300F queries the ACL data base 330 for the access authority of a user of the corresponding source node and sets a processing rule based on the access authority. In Fig. 14, a query and a response are directly exchanged between each of the control apparatuses 300D to 300F and the ACL data base 330. However, a query and a response may be forwarded via the corresponding one of the forwarding nodes 200D and 200F between the corresponding one of the control apparatuses 300D to 300F and the ACL data base 330.

As described in the above present exemplary embodiment, the present disclosure can easily be accommodated to an increase in the number of forwarding nodes or users or to scale-out of control apparatuses along with such increase.

While exemplary embodiments of the present disclosure have thus been described, the present disclosure is not limited thereto. Further variations, substitutions, and modifications can be made without departing from the basic technical concept of the present disclosure. For example, while the control apparatus 300, the authentication apparatus 310, and the IAM 320 are separately arranged in the above exemplary embodiments, these components may be suitably integrated.

In addition, while the user terminal 100A (100B) directly executes an authentication procedure with the authentication apparatus 310 in the above exemplary embodiments, a forwarding node may forward an authentication packet relating to the authentication procedure to the authentication apparatus so that the authentication procedure is executed. For example, this can be realized by setting a processing rule, in which a matching rule determining the authentication packet and an action for forwarding the packet to the authentication apparatus 310 are defined, in a forwarding node connected to the user terminal 100A (100B).

Finally, exemplary embodiments of the present disclosure will be summarized.

### [Exemplary embodiment 1]

(See the communication system according to the first aspect)

### [Exemplary embodiment 2]

In the communication system according to exemplary embodiment 1, it is preferable that an entry in the second table be created by using access control policy information in which an accessible or inaccessible resource group is defined for each role given to a user and resource information in which details of a resource belonging to each of the groups is defined.

### [Exemplary embodiment 3]

In the communication system according to exemplary embodiment 2, it is preferable that the communication system include an access policy management unit which updates, when data in at least one of the access control policy information and the resource information is updated, an entry corresponding to the updated data in the second table.

### [Exemplary embodiment 4]

In the communication system according to any one of exemplary embodiments 1 to 3, it is preferable that an entry of an authenticated user be registered in the first table, and when the user logs out, the entry of the user be deleted from the first table.

### [Exemplary embodiment 5]

In the communication system according to any one of exemplary embodiments 1 to 4, it is preferable that a validity period be set in each entry in the first table, and if the validity period in an entry elapses, the data base delete the entry from the first table.

### [Exemplary embodiment 6]

In the communication system according to any one of exemplary embodiments 1 to 5, it is preferable that the communication system include: an authentication apparatus which executes user authentication and updates the first table; and a policy management terminal which receives input of an update content of the second table and updates the second table.

### [Exemplary embodiment 7]

In the communication system according to any one of exemplary embodiments 1 to 6, it is preferable that the control apparatus set, based on the response from the data base, a processing rule for causing a predetermined forwarding node to discard a packet addressed to a resource that the user of the source node is prohibited to access.

### [Exemplary embodiment 8]

In the communication system according to any one of exemplary embodiments 1 to 7, it is preferable that the response from the data base include information about a position where the user of the source node can or cannot access the resource. In addition, it is preferable that, if the control apparatus receives a request for setting the processing rule from any one of the forwarding nodes, the control apparatus set a processing rule for permitting or prohibiting access to the resource in forwarding nodes corresponding to the position information, in addition to the forwarding node from which the control apparatus has received the request for setting the processing rule.

### [Exemplary embodiment 9]

(See the data base according to the second aspect)

### [Exemplary embodiment 10]

(See the control apparatus according to the third aspect)

### [Exemplary embodiment 11]

(See the communication method according to the fourth aspect)

### [Exemplary embodiment 12]

(See the program according to the fifth aspect)

The data base, the control apparatus, the communication method, and the program can be similarly extended to exemplary embodiments 2 to 8, as in the communication system according to exemplary embodiment 1.

The entire disclosures of the above Patent Literature and Non Patent Literatures are incorporated herein by reference thereto. Modifications and adjustments of the exemplary embodiments are possible within the scope of the overall disclosure (including the claims) of the present invention and based on the basic technical concept of the present invention. Various combinations and selections of various disclosed elements (including the elements in each of the claims, examples, drawings, etc.) are possible within the scope of the claims of the present invention. That is, the present invention of course includes various variations and modifications that could be made by those skilled in the art according to the overall disclosure including the claims and the technical concept.

### [Reference Signs List]

- 11: node communication unit
- 12: control message processing unit
- 13: processing rule management unit
- 14: processing rule storage unit
- 15: forwarding node management unit
- 16: processing rule creation unit
- 17: topology management unit
- 18: terminal position management unit
- 19: ACL information query unit
- 100, 100A, 100B: user terminal
- 200A to 200F: forwarding node
- 201: forwarding node group
- 300, 300D to 300F: control apparatus
- 310: authentication apparatus
- 320: integrated access manager (IAM)
- 321: access control policy storage unit
- 322: resource information storage unit
- 323: access control policy management unit
- 330: ACL data base
- 330A: data base
- 331: authentication information table (first table)
- 332: access control policy information table (second table)
- 340: policy management terminal
- 600: network resource
- 600A: business server
- 600B: management tool

## Claims

1. A communication system, comprising:
a plurality of forwarding nodes each of which processes an incoming packet in accordance with a processing rule (packet handling operation) in which a matching rule that determines a flow and a processing content that is applied to a packet matching the matching rule are associated with each other;
a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and
a control apparatus which uses, when receiving a request for setting the processing rule (packet handling operation) from any one of the forwarding nodes, information about the source node included in the request for setting the processing rule (packet handling operation), querying the data base for a resource accessible or inaccessible by the user of the source node, creating the processing rule (packet handling operation) based on the response from the data base, and setting the processing rule (packet handling operation) in the forwarding node.

2. The communication system according to claim 1;
wherein an entry in the second table is created by using access control policy information in which an accessible or inaccessible resource group is defined for each role given to a user and resource information in which details of a resource belonging to each of the groups is defined.

3. The communication system according to claim 2, further comprising:
an access policy management unit which updates, when data in at least one of the access control policy information and the resource information is updated, an entry corresponding to the updated data in the second table.

4. The communication system according to any one of claims 1 to 3;
wherein an entry of an authenticated user is registered in the first table, and when the user logs out, the entry of the user is deleted from the first table.

5. The communication system according to any one of claims 1 to 4;
wherein a validity period is set in each entry in the first table, and if the validity period in an entry elapses, the data base deletes the entry from the first table.

6. The communication system according to any one of claims 1 to 5, further comprising:
an authentication apparatus which executes user authentication and updates the first table; and
a policy management terminal which receives input of an update content of the second table and updates the second table.

7. The communication system according to any one of claims 1 to 6;
wherein the control apparatus sets, based on the response from the data base, a processing rule (packet handling operation) for causing a predetermined forwarding node to discard a packet addressed to a resource that the user of the source node is prohibited to access.

8. The communication system according to any one of claims 1 to 7;
wherein the response from the data base includes information about a position where the user of the source node can or cannot access the resource;
wherein, if the control apparatus receives a request for setting the processing rule (packet handling operation) from any one of the forwarding nodes, the control apparatus sets a processing rule (packet handling operation) for permitting or prohibiting access to the resource in forwarding nodes corresponding to the position information, in addition to the forwarding node from which the control apparatus has received the request for setting the processing rule (packet handling operation).

9. A data base,
connected to a control apparatus setting a processing rule (packet handling operation) in a plurality of forwarding nodes each of which processes an incoming packet in accordance with the processing rule (packet handling operation) in which a matching rule that determines a flow and a processing content that is applied to a packet matching the matching rule are associated with each other;
storing a first table for determining a role of a user of a source node from information about the source node and a second table for defining an accessible or inaccessible resource for each role; and
transmitting a response about a resource accessible or inaccessible by the user of the source node in response to a request from the control apparatus.

10. A control apparatus,
connected to a plurality of forwarding nodes each of which processes an incoming packet in accordance with a processing rule (packet handling operation) in which a matching rule that determines a flow and a processing content that is applied to a packet matching the matching rule are associated with each other;
connected to a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and
using, when receiving a request for setting the processing rule (packet handling operation) from any one of the forwarding nodes, information about the source node included in the request for setting the processing rule (packet handling operation), querying the data base for a resource accessible or inaccessible by the user of the source node, creating the processing rule (packet handling operation) based on the response from the data base, and setting the processing rule (packet handling operation) in the forwarding node.

11. A communication method for a communication system comprising: a plurality of forwarding nodes each of which processes an incoming packet in accordance with a processing rule (packet handling operation) in which a matching rule that determines a flow and a processing content that is applied to a packet matching the matching rule are associated with each other; a data base which stores a first table for determining a role of a user of a source node from information about the source node and a second table for defining an accessible or inaccessible resource for each role and which transmits a response about a resource accessible or inaccessible by the user of the source node in response to a request from a control apparatus; and a control apparatus which sets the processing rule (packet handling operation) in the forwarding nodes, the communication method comprising steps of:
causing the control apparatus to query the data base, when receiving a request for setting the processing rule (packet handling operation) from any one of the forwarding nodes, for a resource accessible or inaccessible by the user of the source node; and
causing the control apparatus to create the processing rule (packet handling operation) based on the response from the data base and setting the processing rule (packet handling operation) in the forwarding node.

12. A program causing a computer included in a control apparatus, which is connected to a plurality of forwarding nodes each of which processes an incoming packet in accordance with a processing rule (packet handling operation) in which a matching rule that determines a flow and a processing content that is applied to a packet matching the matching rule are associated with each other and to a data base which stores a first table for determining a role of a user of a source node from information about the source node and a second table for defining an accessible or inaccessible resource for each role and which transmits a response about a resource accessible or inaccessible by the user of the source node in response to a request from the control apparatus and which sets the processing rule (packet handling operation) in the forwarding nodes, to execute processes of:
causing the control apparatus to query the data base, when receiving a request for setting the processing rule (packet handling operation) from any one of the forwarding nodes, for a resource accessible or inaccessible by the user of the source node; and
causing the control apparatus to create the processing rule (packet handling operation) based on the response from the data base and setting the processing rule (packet handling operation) in the forwarding node.
